# EUROPEAN PATENT APPLICATION

(11) **EP 4 340 097 A1**
(43) Date of publication of application: **20.03.2024**
(21) Application number: 22206967.6
(22) Date of filing: 11.11.2022
(51) Int. Cl.: H01M 10/48, H01M 10/651

(54) **BATTERY, BATTERY DEVICE, AND QUALITY INSPECTION METHOD OF BATTERY**

(30) Priority: 19.09.2022 CN 202211134379
(71) Applicant: CALB Co., Ltd., Changzhou City, Jiangsu Province (CN)
(72) Inventor: CAO, Zhijuan, Changzhou City, Jiangsu Province (CN); LI, Kui, Changzhou City, Jiangsu Province (CN)
(74) Representative: Becker, Eberhard

(57) **Abstract**

A battery includes a battery body (1) having a body top surface (13), a body bottom surface (14), and a body side wall. The body side wall includes two oppositely disposed first side walls (11). Distance between outer surfaces of the two first side walls (11) is L. First and second positions not coincide with each other are taken on midline (d) of any first side wall (11), the first position is located in a range of 0 to 10mm from the body top surface (13), the second position is located in a range of 0 to 10mm from the body bottom surface (14), and distance between the first and second positions is H. Under conditions of ambient temperature being 25°C and 2C current rate, temperature at first position is T1, temperature at second position is T2, and the battery satisfies (T1-T2)×3L/H≤20°C.

## Description

### BACKGROUND

### Technical Field

The disclosure relates to the technical field of batteries, and particularly relates to a battery, a battery device, and a quality inspection method of the battery.

### Description of Related Art

Lithium-ion secondary batteries are widely used in electric vehicles and consumer products due to advantages such as high voltage platform, high energy density, high output power, no memory effect, long cycle life, and low environmental pollution.

### SUMMARY

According to an aspect of the disclosure, a battery, including a battery body, is provided. The battery body includes a body top surface, a body bottom surface, and a body side wall. The body side wall includes two oppositely disposed first side walls, and a distance between outer surfaces of the two first side walls is L. A first position and a second position that do not coincide with each other are taken on a midline of any first side wall, the first position is located in a range of 0 to 10 mm from the body top surface, the second position is located in a range of 0 to 10 mm from the body bottom surface, and a distance between the first position and the second positions is H. Under conditions of an ambient temperature being 25°C and a 2C current rate, a temperature at the first position is T1, a temperature at the second position is T2, and the battery satisfies (T1-T2)×3L/H≤20°C. The midline of the first side wall is a straight line passing through a geometric center of the outer surface of the first side wall and perpendicular to the body bottom surface. An operation of performing a temperature test on the battery "under the conditions of the ambient temperature being 25°C and the 2C current rate" specifically refers to performing a cycle test on the battery according to the following procedures under the temperature of 25°C: 1) charge to 4.3V constant voltage charge with 2C rate constant current until current is less than 0.05C; 2) let stand for 5 minutes; 3) discharge to 2.8C at a 1C rate; 4) let stand for 5 minutes; perform a 3-week cycle test according to Steps 1) to 4), and record a highest temperature of the battery.

According to another aspect of the disclosure, a battery device includes the battery as described above.

According to another aspect of the disclosure, a quality inspection method applicable to a battery is provided. The battery includes a battery body. The battery body includes a body top surface, a body bottom surface, and a body side wall. The body side wall includes two oppositely disposed first side walls. The quality inspection method includes the following steps. In a temperature measurement step, under conditions of an ambient temperature being 25°C and a 2C current rate, on a midline of the first side wall of the battery, a first position and a second position that do not coincide with each other are taken, the first position is located in a range of 0 to 10 mm from the body top surface, the second position is located in a range of 0 to 10 mm from the body bottom surface, a temperature at the first position is detected and the temperature is marked as T1, and a temperature at the second position is detected and the temperature is marked as T2. The midline of the first side wall is a straight line passing through a geometric center of an outer surface of the first side wall and perpendicular to the body bottom surface. In a computation step, T1 and T2 are substituted into (T1-T2)×3L/H, where H is a distance between the first position and the second position, and L is a distance between the outer surfaces of the two first side walls. In a judgment step, if (T1-T2)×3L/H≤20°C, the test battery is judged as a qualified product, and if not, the test battery is judged to be unqualified.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a perspective view of a battery prepared according to Examples 1 to 11, Comparative Example 1, and Comparative Example 2.
FIG. 2 is a schematic view of a structural relationship of a battery body prepared according to Examples 1 to 11, Comparative Example 1, and Comparative Example 2.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

According to a first aspect of the disclosure, a battery is provided. The battery includes a battery body. The battery body includes a body top surface, a body bottom surface, and a body side wall. The body side wall includes two oppositely disposed first side walls, and a distance between outer surfaces of the two first side walls is L. A first position and a second position that do not coincide with each other are taken on a midline of any first side wall, the first position is located in a range of 0 to 10 mm from the body top surface, the second position is located in a range of 0 to 10 mm from the body bottom surface, and a distance between the first position and the second positions is H. Under conditions of an ambient temperature being 25°C and a 2C current rate, a temperature at the first position is T1, a temperature at the second position is T2, and the battery satisfies (T1-T2)×3L/H≤20°C. The midline of the first side wall is a straight line passing through a geometric center of the outer surface of the first side wall and perpendicular to the body bottom surface. In the battery provided by the disclosure, the internal temperature difference and the size of the battery body constitute a particular relationship. Therefore, during the actual application process of the battery, the internal heat can be effectively transferred to the outside, so that the temperature difference inside the battery can be alleviated in time, thereby ensuring that a battery product has good temperature consistency. As such, even under low temperature conditions, the battery does not rapidly age, and the battery has small polarization and good low temperature rate performance.

Preferably, under the conditions of the ambient temperature being 25°C and the 2C current rate, the battery satisfies T1-T2 ≤ 15°C. When the internal temperature difference of the battery satisfies the above conditions, the temperature gradient inside the battery body is small, so that the battery can have good temperature consistency, which is beneficial to prolonging the service life of the battery.

Preferably, the distance between the first position and the second position is 40 mm ≤ H ≤200 mm.

Preferably, under the conditions of the ambient temperature being 25°C and the 2C current rate, the temperature at the first position is taken as T1, and T1 is 40 to 60°C.

Preferably, under the conditions of the ambient temperature being 25°C and the 2C current rate, the temperature at the second position is taken as T2, and T2 is 30 to 58°C.

Under the conditions of the ambient temperature being 25°C and the 2C current rate, if T1 is 40 to 60°C or if T2 is 30 to 58°C, a working temperature of the battery may be ensured to be always in an appropriate range, which can prevent normal use of the battery from being affected due to the working temperature of the battery being too low, and can prevent thermal runaway due to the working temperature of the battery being too high on the other hand.

Preferably, the body side wall further includes two oppositely disposed second side walls. The first side wall and the second side wall are connected, an included angle formed between the connected first side wall and second side wall is greater than 0° and less than 180°, and an area of the first side wall is greater than or equal to an area of the second side wall.

Preferably, the included angle formed by the connected first side wall and second side wall is 90°.

Preferably, an areal density of an active coating on a surface of a pole piece is 60 to 220 g/cm².

Preferably, an areal density of an anode active coating on a surface of an anode pole piece is 140 to 220 g/cm², and an areal density of a cathode active coating on a surface of a cathode pole piece is 60 to 220 g/cm².

In the battery provided by the disclosure, when the areal density of the anode active coating and the areal density of the cathode active coating satisfy the above conditions, the electrolyte in the battery can fully infiltrate the anode pole piece and the cathode pole piece, thereby improving the infiltration consistency of the pole pieces.

Preferably, the areal density of the anode active coating on the surface of the anode pole piece is 150 to 180 g/cm², and the areal density of the cathode active coating on the surface of the cathode pole piece is 80 to 180 g/cm². The areal density of the anode active coating and the areal density of the cathode active coating satisfy the above conditions, which can further optimize the infiltration effect of the electrolyte on the anode pole piece and the cathode pole piece, and enable the pole pieces to maintain sufficient energy densities. On the other hand, from the perspective of processing the pole pieces, enabling the areal densities of the pole pieces to reach the above ranges does not require complex processing technology, which is beneficial to saving the process cost of processing the pole pieces.

Preferably, in the anode active coating on the surface of the anode pole piece, a particle diameter of an anode active main material satisfies D₅₀ = 2 to 14 µm. In the cathode active coating on the surface of the cathode pole piece, a particle diameter of a cathode active main material satisfies D₅₀ = 4 to 20 µm. Enabling the particle diameters of the anode active main material and the cathode active main material to satisfy the above ranges can reduce the migration distance of lithium ions, thereby reducing impedance and improving the rate performance of the battery, and on the other hand, preparing the active main materials with particle diameters in the ranges does not require complex processing technology, which is beneficial to saving the process cost of processing the pole pieces.

Preferably, the battery further includes a pole. The pole is disposed on the body top surface.

According to a second aspect of the disclosure, a battery device is provided. The battery device includes the battery.

Preferably, the battery device includes the battery and a liquid cooling plate. The battery is disposed above the liquid cooling plate. The battery device provided by the disclosure adopts the liquid cooling plate to be used with the battery. When the local temperature of the battery is too high, the liquid cooling device may be turned on to speed up the heat exchange efficiency between the battery and the environment, so that the battery can maintain good temperature consistency.

According to a third aspect of the disclosure, a quality inspection method applicable to a battery is provided. The battery includes a battery body. The battery body includes a body top surface, a body bottom surface, and a body side wall. The body side wall includes two oppositely disposed first side walls. The quality inspection method includes the following steps. In a temperature measurement step, under conditions of an ambient temperature being 25°C and a 2C current rate, on a midline of the first side wall of the battery, a first position and a second position that do not coincide with each other are taken, the first position is located in a range of 0 to 10 mm from the body top surface, the second position is located in a range of 0 to 10 mm from the body bottom surface, a temperature at the first position is detected and the temperature is marked as T1, and a temperature at the second position is detected and the temperature is marked as T2. The midline of the first side wall is a straight line passing through a geometric center of an outer surface of the first side wall and perpendicular to the body bottom surface. In a computation step, T1 and T2 are substituted into (T1-T2)×3L/H, where H is a distance between the first position and the second position, and L is a distance between the outer surfaces of the two first side walls. In a judgment step, if (T1-T2)×3L/H≤20°C, the test battery is judged as a qualified product, and if not, the test battery is judged to be unqualified. The quality control of the battery according to the quality inspection method provided by the disclosure can accurately reflect the working condition of the battery in a low temperature state, thereby simplifying the difficulty of quality inspection of the low temperature performance of the battery and reducing the cost of quality inspection, which is beneficial to accurately and comprehensively controlling the quality of the battery product to improve the yield of the battery.

Preferably, the distance between the first position and the second position is 40 mm ≤ H ≤200 mm.

Preferably, the body side wall further includes two oppositely disposed second side walls. The first side wall and the second side wall are connected, an included angle formed between the connected first side wall and second side wall is greater than 0° and less than 180°, and an area of the first side wall is greater than or equal to an area of the second side wall.

In order for persons skilled in the art to better understand the solutions of the disclosure, the technical solutions in the embodiments of the disclosure will be clearly and completely described below. Obviously, the described embodiments are only a part of the embodiments of the disclosure, but not all of the embodiments.

### Example 1

### 1. Preparation of cathode pole piece:

Cathode slurry was prepared according to the following method. Graphite, polyaniline, and graphene were mixed in a mass ratio of graphite:polyaniline:graphene = 96.4:1.6:2 to obtain a cathode active material, wherein a surface roughness Ra of the graphite used was 3.1, D₅₀ = 15 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 80 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and a conductive agent SP were mixed in a mass ratio of anode active material NCM523:binder PVDF:conductive agent SP = 96:2:2, wherein a particle diameter of the anode active material NCM523 satisfies D₅₀ = 10 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on a surface of the anode current collector. After drying at room temperature, the anode slurry was transferred to an oven to continue drying until dried, so as to form an active coating with an areal density of 150 g/cm² on the surface of the anode current collector to obtain a semi-finished anode pole piece. Then, the semi-finished anode pole piece was cold-pressed and slit to obtain an anode pole piece to be assembled.

### 3. Preparation of electrolyte

Dimethyl carbonate (DMC), ethyl methyl carbonate (EMC), propylene carbonate (PC), butyl acrylate (BA), and fluoroethylene carbonate (FEC) were mixed in a volume ratio of DMC:EMC:PC:BA:FEC = 3:5:0.35:0.4:16 to obtain an organic solvent. Then, fully dry lithium salt LiPF₆ was dissolved in the organic solvent to obtain electrolyte with a concentration of 1 mol/L.

### 4. Selection of separator

In this example, a polyethylene film was selected as the separator of the battery.

### 5. Assembly of battery

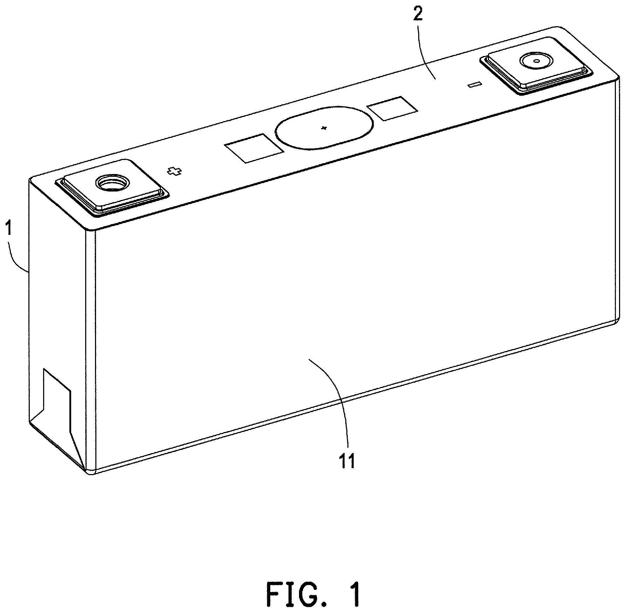

The anode pole piece, the separator, and the cathode pole piece were stacked in sequence, so that the separator was placed between the anode pole piece and the cathode pole piece to play a role of separation. Then, a bare core was obtained by winding. The bare core was placed in an outer packaging case, dried, and then injected into the electrolyte. The battery was obtained through processes such as vacuum packaging, standing, forming, and shaping. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 2

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and conductive SP were mixed in a mass ratio of graphite:polyaniline:conductive SP = 96:3:1 to obtain a cathode active material, wherein a surface roughness Ra of the graphite used was 3.1, D₅₀ = 9 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 130 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder polyimide (PI), and acetylene black were mixed in a mass ratio of anode active material NCM523:binder PI:acetylene black = 96:2:2, wherein a particle diameter of the anode active material NCM523 satisfies D₅₀ = 5 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 170 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 3

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and graphene were mixed in a mass ratio of graphite:polyaniline:graphene = 96:2:2 to obtain a cathode active material, wherein a surface roughness Ra of the graphite used was 3.1, D₅₀ = 9 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 90 g/cm². A dry semi-finished cathode pole piece was obtained after winding. Then, the semi-finished cathode pole piece was cold-pressed and slit to obtain a cathode pole piece to be assembled.

2. Preparation of anode pole piece:

Anode slurry was prepared according to the following method. An anode active material NCM523, a binder polyimide (PI), and acetylene black were mixed in a mass ratio of anode active material NCM523:binder PI:acetylene black = 95.5:2:1.5, wherein a particle diameter of the anode active material NCM523 satisfies D₅₀ = 7 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 160 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 4

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, acetylene black, thickener CMC, and a binder SBR were mixed in a mass ratio of graphite:acetylene black:thickener CMC:binder SBR = 96.4:1:1.2:1.4 to obtain a cathode active material, wherein a surface roughness Ra of the graphite used was 3.1, D₅₀ = 14 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 220 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and acetylene black were mixed in a mass ratio of anode active material NCM523:binder PVDF:acetylene black = 95:2.5:2.5, wherein a particle diameter of the anode active material NCM523 satisfies D₅₀ = 12 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 220 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 5

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and graphene were mixed in a mass ratio of graphite:polyaniline:graphene = 95:2.5:2.5 to obtain a cathode active material, wherein a surface roughness Ra of the graphite used was 3.1, D₅₀ = 15 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 130 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and conductive SP were mixed in a mass ratio of anode active material NCM523:binder PVDF:conductive SP = 95.5:2:1.5, wherein a particle diameter of the anode active material NCM523 satisfies D₅₀ = 10 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 180 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 6

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and graphene were mixed in a mass ratio of graphite:polyaniline:graphene = 95:2.5:2.5 to obtain a cathode active material, wherein a surface roughness Ra of the graphite used was 3.1, D₅₀ = 15 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 130 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and conductive SP were mixed in a mass ratio of anode active material NCM523:binder PVDF:conductive SP = 95.5:2:1.5, wherein a particle diameter of the anode active material NCM523 satisfies D₅₀ = 10 µm. Then, NMP as a solvent was added to the mixed slurry The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 180 g/cm² on the surface of the anode current collector to obtain a semi-finished anode pole piece. Then, the semi-finished anode pole piece was cold-pressed and slit to obtain an anode pole piece to be assembled.

### Example 7

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and graphene were mixed in a mass ratio of graphite:polyaniline:graphene = 95:2.5:2.5 to obtain a cathode active material, wherein a surface roughness Ra of the graphite used was 3.1, D₅₀ = 15 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 130 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and conductive SP were mixed in a mass ratio of anode active material NCM523:binder PVDF:conductive SP = 95.5:2:1.5, wherein a particle diameter of the anode active material NCM523 satisfies D₅₀ = 10 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 180 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 8

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and graphene were mixed in a mass ratio of graphite:polyaniline:graphene = 95:2.5:2.5 to obtain a cathode active material, wherein a surface roughness Ra of the graphite used was 3.1, D₅₀ = 15 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 130 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and conductive SP were mixed in a mass ratio of anode active material NCM523:binder PVDF:conductive SP = 95.5:2:1.5, wherein a particle diameter of the anode active material NCM523 satisfies D₅₀ = 10 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 180 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 9

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and acetylene black were mixed in a mass ratio of graphite:polyaniline:acetylene black = 96:2:2 to obtain a cathode active material, wherein a surface roughness Ra of the graphite used was 3.1, D₅₀ = 20 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 130 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder polyimide (PI), and acetylene black were mixed in a mass ratio of anode active material NCM523:binder PI:acetylene black = 96:2:2, wherein a particle diameter of the anode active material NCM523 satisfies Dso = 14 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 190 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 10

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, polyaniline, and graphene were mixed in a mass ratio of graphite:polyaniline:graphene = 95:2:3 to obtain a cathode active material, wherein a surface roughness Ra of the graphite used was 3.1, D₅₀ = 9 µm. Then, phosphate ester was added to the mixture obtained. The amount of phosphate ester added was 0.5% of the total mass of the cathode active material. Then, solvent deionized water was added to the mixed slurry The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 60 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder polyimide (PI), and acetylene black were mixed in a mass ratio of anode active material NCM523 :binder PI:acetylene black = 95.5:2:1.5, wherein a particle diameter of the anode active material NCM523 satisfies D₅₀ = 7 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 140 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Example 11

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, a binder polyimide (PI), and carbon nanotubes were mixed in a mass ratio of graphite:binder PI:carbon nanotubes = 96:3:1 to obtain a cathode active material, wherein a surface roughness Ra of the graphite used was 3.1, D₅₀ = 4 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 60 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and graphene were mixed in a mass ratio of anode active material NCM523:binder PVDF:graphene = 96:2:2, wherein a particle diameter of the anode active material NCM523 satisfies D₅₀ = 2 µm. Then, NMP as a solvent was added to the mixed slurry The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 150 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Comparative Example 1

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, acetylene black, thickener CMC, and a binder SBR were mixed in a mass ratio of graphite:acetylene black:thickener CMC:binder SBR = 96:1:2:1 to obtain a cathode active material, wherein a surface roughness Ra of the graphite used was 3.1, D₅₀ = 3 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 50 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and acetylene black were mixed in a mass ratio of anode active material NCM523:binder PVDF:acetylene black = 96:2:2, wherein a particle diameter of the anode active material NCM523 satisfies D₅₀ = 1 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 120 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Comparative Example 2

In this example, a battery was prepared with reference to the method provided in Example 1. The difference between this example and Example 1 lies in the preparation of an anode pole piece and a cathode pole piece.

### 1. Preparation of cathode pole piece:

Cathode slurry was prepared according to the following method. Graphite, acetylene black, thickener CMC, and a binder polyimide (PI) were mixed in a mass ratio of graphite:acetylene black:thickener CMC:binder PI = 96.4:1:1.2:1.4 to obtain a cathode active material, wherein a surface roughness Ra of the graphite used was 3.1, D₅₀ = 22 µm. Then, phosphate ester was added to the mixture obtained. The amount of phosphate ester added was 0.5% of the total mass of the cathode active material. Then, solvent deionized water was added to the mixed slurry. The mixed slurry was stirred until uniform under the action of a vacuum mixer, so as to obtain the cathode slurry of this example.

The cathode slurry was uniformly coated on two surfaces of a cathode current collector copper foil, thereby forming an active coating on the surface of the cathode current collector. An areal density of the active coating was controlled to be 230 g/cm². A dry semi-finished cathode pole piece was obtained after winding. Then, the semi-finished cathode pole piece was cold-pressed and slit to obtain a cathode pole piece to be assembled.

### 2. Preparation of anode pole piece:

Anode slurry was prepared according to the following method. An anode active material NCM523, a binder PVDF, and acetylene black were mixed in a mass ratio of anode active material NCM523:binder PVDF:acetylene black = 96:2:2, wherein a particle diameter of the anode active material NCM523 satisfies D₅₀ = 18 µm. Then, NMP as a solvent was added to the mixed slurry. The mixed slurry was stirred until uniform under the action of a vacuum mixer, so as to obtain the anode slurry of this example.

The anode slurry was uniformly coated on two surfaces of an anode current collector aluminum foil, thereby forming an active coating on the surface of the anode current collector. After drying at room temperature, the anode slurry was transferred to an oven to continue drying until dried, so as to form an active coating with an areal density of 230 g/cm² on the surface of the anode current collector to obtain a semi-finished anode pole piece. Then, the semi-finished anode pole piece was cold-pressed and slit to obtain an anode pole piece to be assembled.

The preparation of electrolyte, the selection of a separator, and the assembly of the battery involved in this example are all consistent with Example 1 to obtain the battery of this example. Referring to FIG. 1, the battery obtained includes a battery body 1 and a battery cover plate 2. The battery body 1 is a rectangular parallelepiped, and the battery cover plate 2 is covered on a top portion of the battery body 1.

### Test Example

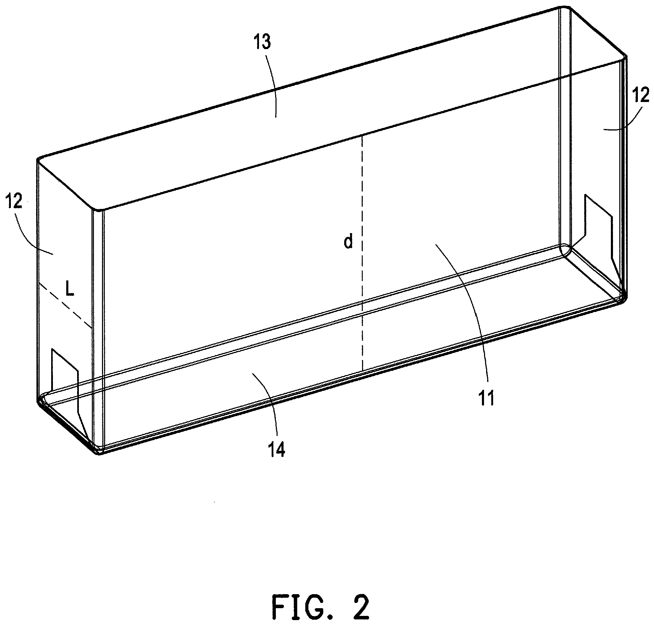

1. Test object: The battery obtained according to Examples 1 to 11 and Comparative Examples 1 and 2 was used as the test object of this test example, and relevant parameters and performance tests were performed. As shown in FIG. 2, a battery body 1 of the test battery includes a body top surface 13, a body bottom surface 14, and a body side wall. The body top surface 13 and the body bottom surface 14 are parallel to each other and have the same shape and size. The body side wall is perpendicular to the body top surface 13 and the body bottom surface 14, wherein the body side wall includes two oppositely disposed first side walls 11 and two oppositely disposed second side walls 12. An area of the first side wall 11 is greater than an area of the second side wall 12. A distance between outer surfaces of the two first side walls 11 is a thickness L of the battery. On the outer surface of the first side wall 11, a straight line passing through a geometric center of the outer surface of the first side wall 11 and perpendicular to the body bottom surface 14 is taken as a midline d of the first side wall 11.

### 2. Test content:

### (1) Battery temperature test

On the midline d of the first side wall 11 of the test battery, a first position in a range of X from the body top surface is selected, where X = 0 to 10 mm, and a second position in a range of Y from the body bottom surface is selected, where Y = 0 to 10 mm. In the above ranges, the selected first position and second position can reliably respectively reflect actual temperatures at a top portion and a bottom portion of the battery. A temperature sensor is respectively disposed at the selected first position and second position. Then, the test battery is placed in a 25°C incubator. A cycle test is performed according to the following procedures:
1) Charge to 4.3V constant voltage charge with 2C rate constant current until current is less than 0.05C;
2) Let stand for 5 minutes;
3) Discharge to 2.8C at a 1C rate;
4) Let stand for 5 minutes;

Perform a 3-week cycle test according to Steps 1) to 4), and respectively record the highest temperatures at the first position and the second position measured by the temperature sensors disposed on the first side walls 11, wherein in this test example, an area of a contact region between a temperature measuring probe of the temperature sensor and the test battery is less than 1 mm². Persons skilled in the art may also select temperature measuring probes with other specifications according to the actual test conditions. The selected temperature probe specifications include, but are not limited to, the contact region between the temperature probe and a product to be tested being about 4 mm² or about 9 mm².

### (2) Cycle performance test

In a -30°C incubator, a cycle test is performed on the test battery according to the following procedures:
1) Charge to 4.3V constant voltage charge with 2C rate constant current until current is less than 0.05C;
2) Let stand for 5 minutes;
3) Discharge to 2.8C at a 1C rate;
4) Let stand for 5 minutes;

Perform the cycle test according to Steps 1) to 4) until the capacity of the battery is less than 80% of the initial capacity, and record the number of cycles.

### (3) Areal density test of anode active coating

### (4) Areal density test of cathode active coating

### 3. Test result

**Table 1. Product structure of test object of this test example**

| Test battery | Areal density of anode active coating (g/cm²) | Areal density of cathode active coating (g/cm²) | Anode active material D50(µm) | Cathode active material D50(µm) | Anode binder, conductive agent | Cathode binder, conductive agent |
|---|---|---|---|---|---|---|
| Example 1 | 150 | 80 | 10 | 15 | PVDF, conductive SP | Polyaniline, graphene |
| Example 2 | 170 | 130 | 5 | 9 | PI, acetylene black | Polyaniline, conductive SP |
| Example 3 | 160 | 90 | 7 | 9 | PI, acetylene black | Polyaniline, graphene |
| Example 4 | 220 | 220 | 12 | 14 | PVDF, acetylene black | CMC+SBR, acetylene black |
| Example 5 | 180 | 130 | 10 | 15 | PVDF, conductive SP | Polyaniline, graphene |
| Example 6 | 180 | 130 | 10 | 15 | PVDF, conductive SP | Polyaniline, graphene |
| Example 7 | 180 | 130 | 10 | 15 | PVDF, conductive SP | Polyaniline, graphene |
| Example 8 | 180 | 130 | 10 | 15 | PVDF, conductive SP | Polyaniline, graphene |
| Example 9 | 190 | 130 | 14 | 20 | PI, acetylene black | Polyaniline, acetylene black |
| Example 10 | 140 | 60 | 7 | 9 | PI, acetylene black | Polyaniline, graphene |
| Example 11 | 150 | 60 | 2 | 4 | PVDF, graphene | Polyimide PI, carbon nanotube |
| Comparative Example 1 | 120 | 50 | 1 | 3 | PVDF, acetylene black | CMC+SBR, acetylene black |
| Comparative Example 2 | 230 | 230 | 18 | 22 | PVDF, acetylene black | Polyimide PI+CMC, acetylene black |

**Table 2. Performance test result of test object of this test example**

| Test battery | T1(°C) | T2(°C) | T1-T2 (°C) | H (mm) | L (mm) | (T1-T2)×3L/H (°C) | -30°C no. of cycles (cycle) | Charge/ discharge capacity |
|---|---|---|---|---|---|---|---|---|
| Example 1 | 56.1 | 32.1 | 24 | 90 | 25 | 20.0 | 2013 | 4.7C |
| Example 2 | 51.3 | 30.9 | 20.4 | 90 | 25 | 17.0 | 2163 | 4.9C |
| Example 3 | 58.9 | 43.9 | 15 | 90 | 25 | 12.5 | 2201 | 5.1C |
| Example 4 | 40 | 30.1 | 9.9 | 90 | 25 | 8.3 | 2344 | 5.4C |
| Example 5 | 55.4 | 48.2 | 7.2 | 90 | 25 | 6.0 | 2412 | 5.6C |
| Example 6 | 57.8 | 49.4 | 8.4 | 90 | 35 | 9.8 | 2298 | 5.2C |
| Example 7 | 52.1 | 47.8 | 4.3 | 40 | 25 | 8.1 | 2367 | 5.4C |
| Example 8 | 58.6 | 49.5 | 9.1 | 200 | 25 | 3.4 | 2477 | 5.8C |
| Example 9 | 49.2 | 40.8 | 8.4 | 90 | 25 | 7.0 | 2398 | 5.5C |
| Example 10 | 60 | 58 | 2 | 90 | 25 | 1.7 | 2503 | 5.9C |
| Example 11 | 55.7 | 54.1 | 1.6 | 40 | 25 | 3.0 | 2489 | 5.9C |
| Comparative Example 1 | 63.6 | 39 | 24.6 | 90 | 25 | 20.5 | 1806 | 4C |
| Comparative Example 2 | 58.8 | 32.1 | 26.7 | 90 | 25 | 22.3 | 1579 | 3.9C |

The product structure of the test object and data of the corresponding performance test result are shown in Table 1 and Table 2. In Table 2, meanings of parameters involved are as follows. The distance between the outer surfaces of the two first side walls 11 is the thickness L of the battery, and the distance between the first position and the second position selected on the surface of the test battery is H.

Among the test batteries, the batteries provided in Examples 1 to 11 all comply with the quantitative relationship of (T1-T2)×3L/H≤20°C, while the batteries provided by Comparative Examples 1 and 2 do not comply with the quantitative relationship. The test result shows that the number of cycles at -30°C of the batteries of Examples 1 to 11 is significantly more, which indicates that the batteries have better low temperature cycle performance.

In the battery, the electrolyte generally does not fill the battery body 1. The electrolyte content in an upper part of the battery body 1 is smaller, which causes a greater internal resistance in the upper part of the battery body 1, thereby causing the heat generation of the upper part of the battery body 1 to be higher. A lower part of the battery body 1 is generally filled with the electrolyte. Therefore, compared with the upper part of the battery body 1, the internal resistance of the lower part of the battery body 1 is smaller and the heat generation is less. Based on the above reason, a temperature difference in which the temperature of the upper part is higher and the temperature of the lower part is lower is formed inside the battery body 1. Due to the principle of heat exchange, the heat inside the battery can be exchanged with the external environment, so that the excess heat of the upper part of the battery body 1 is transferred to the outside of the battery, so as to reduce the temperature difference inside the battery body 1. However, if the thickness of the battery is large, the heat inside the battery body 1 is concentrated, and the heat is difficult to diffuse to the external environment, such that it is difficult to alleviate the temperature difference generated inside the battery body 1 by dissipating heat to the external environment in time. If the temperature difference inside the battery body 1 is too large, that is, the temperature consistency of the battery is poor, the electrical performance of the battery will rapidly decay under low temperature conditions.

As mentioned above, the batteries provided in Examples 1 to 11 all satisfy the quantitative relationship of (T1-T2) × 3L/H ≤ 20 ° C. Therefore, the temperature difference formed inside the battery body 1 due to the uneven distribution of the electrolyte can be effectively alleviated through heat exchange with the external environment, so that the battery can have good temperature consistency. Under low temperature conditions, the battery has a slow aging speed and small polarization, so that the battery has good low temperature rate performance. However, compared with the batteries provided by the above examples, under low temperature conditions, the number of cycles corresponding to the batteries provided by Comparative Examples 1 and 2 is significantly lower, and the charge/discharge capacity is also significantly worse. As shown in the data of Table 1 and Table 2, it can be seen that the battery structures provided by Comparative Example 1 and Comparative Example 2 both do not satisfy the quantitative relationship of (T1-T2)×3L/H≤20°C. This shows that among the battery products used as the test object, the battery whose product structure satisfies (T1-T2)×3L/H≤ 20°C has good low temperature rate performance. In Examples 1 to 11, in the battery products provided in Examples 1 and 2, T1-T2>15°C. Compared with other examples, the number of cycles of the battery products of Example 1 and Example 2 is less under low temperature conditions, and the charge/discharge capacity is also weaker, which means that on the premise that the product structure complies with (T1-T2)×3L/H≤20°C, if the battery product further satisfies T1-T2≤ 15°C, the low temperature rate performance thereof is better.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery, wherein:
the battery comprises a battery body (1), the battery body (1) comprises a body top surface (13), a body bottom surface (14), and a body side wall, the body side wall comprises two oppositely disposed first side walls (11), and a distance between outer surfaces of the two first side walls (11) is L;
a first position and a second position that do not coincide with each other are taken on a midline (d) of any of the first side walls (11), the first position is located in a range of 0 to 10 mm from the body top surface (13), the second position is located in a range of 0 to 10 mm from the body bottom surface (14), and a distance between the first position and the second position is H;
under conditions of an ambient temperature being 25°C and a 2C current rate, a temperature at the first position is T1, a temperature at the second position is T2, and the battery satisfies (T1-T2)×3L/H≤20°C,
wherein the midline (d) of the first side wall (11) is a straight line passing through a geometric center of the outer surface of the first side wall (11) and perpendicular to the body bottom surface (14).

2. The battery according to claim 1, wherein: under the conditions of the ambient temperature being 25°C and the 2C current rate, the battery satisfies T1-T2≤15°C.

3. The battery according to claim 2, wherein the distance between the first position and the second position is 40 mm≤H≤200 mm.

4. The battery according to claim 2, wherein: under the conditions of the ambient temperature being 25°C and the 2C current rate, the temperature at the first position is taken as T1, and T1 is 40 to 60°C.

5. The battery according to claim 2, wherein: under the condition of the ambient temperature being 25°C and the 2C current rate, the temperature at the second position is T2, and T2 is 30 to 58°C.

6. The battery according to claim 1, wherein the body side wall further comprises two oppositely disposed second side walls (12), the first side wall (11) and the second side wall (12) are connected, an included angle formed between the connected first side wall (11) and second side wall (12) is greater than 0° and less than 180°, and an area of the first side wall (11) is greater than or equal to an area of the second side wall (12).

7. The battery according to claim 1, further comprising: a pole piece, wherein an areal density of an active coating on a surface of the pole piece is 60 to 220 g/cm².

8. The battery according to claim 7, wherein the pole piece comprises an anode pole piece and a cathode pole piece, wherein an areal density of an anode active coating on a surface of the anode pole piece is 140 to 220 g/cm², and an areal density of a cathode active coating on a surface of the cathode pole piece is 60 to 220 g/cm².

9. The battery according to claim 8, wherein the areal density of the anode active coating on the surface of the anode pole piece is 150 to 180 g/cm², and the areal density of the cathode active coating on the surface of the cathode pole piece is 80 to 180 g/cm².

10. The battery according to claim 7, wherein the pole piece comprises an anode pole piece and a cathode pole piece, wherein in an anode active coating on a surface of the anode pole piece, a particle diameter of an anode active main material satisfies Dso = 2 to 14 µm; in a cathode active coating on a surface of the cathode pole piece, a particle diameter of a cathode active main material satisfies D₅₀ = 4 to 20 µm.

11. The battery according to claim 1, further comprising: a pole, wherein the pole is disposed on the body top surface (13).

12. A battery device, comprising the battery according to any one of claims 1-11.

13. A quality inspection method applicable to a battery, wherein the battery comprises a battery body (1), the battery body (1) comprises a body top surface (13), a body bottom surface (14), and a body side wall, and the body side wall comprises two oppositely disposed first side walls (11), the quality inspection method comprising following steps:
a temperature measurement step of, under conditions of an ambient temperature being 25°C and a 2C current rate, on a midline (d) of the first side wall (11) of the battery, taking a first position and a second position that do not coincide with each other, wherein the first position is located in a range of 0 to 10 mm from the body top surface (13), and the second position is located in a range of 0 to 10 mm from the body bottom surface (14), detecting a temperature at the first position and marking the temperature as T1, and detecting a temperature at the second position and marking the temperature as T2, wherein the midline (d) of the first side wall (11) is a straight line passing through a geometric center of an outer surface of the first side wall (11) and perpendicular to the body bottom surface (14);
a computation step of substituting the T1 and the T2 into (T1-T2)×3L/H, where H is a distance between the first position and the second position, and L is a distance between the outer surfaces of the two first side walls (11);
a judgment step of, when (T1-T2)×3L/H≤20°C, judging a test battery as a qualified product, and when otherwise, judging the test battery to be unqualified.

14. The quality inspection method applicable to the battery according to claim 13, wherein:
the distance between the first position and the second position is 40 mm≤H≤200 mm.

15. The quality inspection method applicable to the battery according to claim 13, wherein: the body side wall further comprises two oppositely disposed second side walls (12), the first side wall (11) and the second side wall (12) are connected, an included angle formed between the connected first side wall (11) and second side wall (12) is greater than 0° and less than 180°, and an area of the first side wall (11) is greater than or equal to an area of the second side wall (12).
